# EUROPÄISCHE PATENTSCHRIFT

(11) **EP 1 362 830 B1**
(45) Veröffentlichungstag und Bekanntmachung des Hinweises auf die Patenterteilung: **29.11.2006**
(21) Anmeldenummer: 03008675.5
(22) Anmeldetag: 16.04.2003
(51) Int. Cl.: C01G 23/00

(54) **Verfahren zur Herstellung von Barium- oder Strontiumtitanat mit mittleren Durchmessern kleiner als 10 Nanometer**
Method for producing barium- or strontium titanate with average diameters lower than 10 nanometer
Procédé de préparation de titanate de strontium ou de barium avec un diamètre moyen inférieur à 10 nanomètres

(30) Priorität: 14.05.2002 DE 10221499; 18.07.2002 DE 10232791
(43) Veröffentlichungstag der Anmeldung: 19.11.2003
(73) Patentinhaber: BASF Aktiengesellschaft, 67056 Ludwigshafen (DE)
(72) Erfinder: Sterzel, Hans-Josef, Dr., 67125 Dannstadt-Schauernheim (DE)

(56) Entgegenhaltungen:
- WO-A-03/096362
- US-A- 3 647 364
- US-A- 4 587 041
- US-A- 4 968 498
- XIA C-T ET AL: "Hydrothermal synthesis of BaTiO3 nano/microcrystals" JOURNAL OF CRYSTAL GROWTH, NORTH-HOLLAND PUBLISHING CO. AMSTERDAM, NL, Bd. 166, Nr. 1, 1. September 1996 (1996-09-01), Seiten 961-966, XP004053482 ISSN: 0022-0248

## Beschreibung

Die vorliegende Erfindung betrifft ein Verfahren zur Herstellung von Barium- oder Strontiumtitanat mit einem mittleren Teilchendurchmesser von kleiner als 10 nm durch Umsetzung von Titanalkoholaten mit Barium- oder Strontiumhydroxid-hydrat und wasserfreiem Barium- oder Strontiumhydroxid in einem Alkohol oder einem Glykolether bei erhöhter Temperatur.

Aus J. Am. Ceram. Soc., Vol 52, No. 10, Seite 523 bis 526 (1969) ist die Herstellung von Bariumtitanat-Pulvern aus Bariumisopropoxid und Titantetra-tert.-amyloxid in einem Lösungsmittel unter Rückfluss und anschließende tropfenweise Wasserzugabe bekannt. Die Korngröße des kristallinen Materials nach Trocknung bei 50°C beträgt 5 bis 15 nm. Zur Entfernung organischer Reste ist eine Erhitzung auf mindestens 900°C erforderlich, wobei Kohlenstoff im Titanat verbleibt, das Ursache für hohe Leckströme ist und bei der Verwendung als Kondensatormaterial nachteilig ist.

Aus High Tech Ceramics, 1987, Seite 1459 bis 1468 ist ein Verfahren zur Herstellung kohlenstofffreier Bariumtitanate durch Einbringen einer wässrigen Bariumhydroxid-octahydrat-Lösung in eine Lösung von Titantetra-n-butylat in Butanol bekannt, wobei ein Gel entsteht, das bei 100°C getrocknet und bei 1350°C gesintert wird. Die Korngröße beträgt ca. 1 µm.

Nachteilig an diesen Verfahren sind die Größe der erhaltenen Körner bzw. der verbleibende Kohlenstoffgehalt.

Der vorliegenden Erfindung lag daher die Aufgabe zugrunde, den zuvor genannten Nachteilen abzuhelfen.

Demgemäß wurde ein neues und verbessertes Verfahren zur Herstellung von Barium- oder Strontiumtitanat mit einem mittleren Teilchendurchmesser von kleiner als 10 nm gefunden, welches dadurch gekennzeichnet ist, dass man Titanalkoholate mit Barium- oder Strontiumhydroxid-hydrat und wasserfreiem Barium- oder Strontiumhydroxid, wobei über das Kristallwasser insgesamt 2 bis 4 Mole Wasser pro Mol Titanat eingebracht werden, in einem C₁- bis C₈-Alkohol oder einem Glykolether, wobei die alkoholische Titanalkoholat-Lösung eine Konzentration von 50 bis 800 g/l aufweist, bei einer Temperatur von 50 bis 150°C umsetzt.

Das erfindungsgemäße Verfahren lässt sich wie folgt durchführen:

Man kann Titanalkoholate in einem C₁- bis C₈-Alkanol, in einem Glykolether oder deren Gemischen vorlegen und bei einer Temperatur von 50 bis 150°C, bevorzugt 60 bis 120°C, besonders bevorzugt 70 bis 110°C, insbesondere bei Rückflusstemperatur und einem Druck von 0,1 bis 3 bar, bevorzugt 0,5 bis 2 bar, besonders bevorzugt bei Atmosphärendruck (Normaldruck) mit Barium- oder Strontiumhydroxid-hydrat und wasserfreiem Barium- oder Strontiumhydroxid umsetzen.

Die Konzentration der alkoholischen Titanalkoholat-Lösung liegt erfindungsgemäß bei 50 bis 800 g/Liter, bevorzugt bei 100 bis 600 g/Liter, besonders bevorzugt bei 200 bis 400 g/Liter.

Als Titanalkoholate eignen sich beispielsweise Titantetramethanolat, Titantetraethanolat, Titantetra-n-propanolat, Titantetra-iso-propanolat, Titantetra-n-butanolat, Titantetra-isobutanolat, Titantetra-sec.-butanolat, Titantetra-tert.-butanolat, Titantetra-n-pentanolat und Titantetra-iso-pentanolat, bevorzugt Titantetraethanolat, Titantetra-n-propanolat, Titantetra-iso-propanolat, Titantetra-n-butanolat, Titantetra-isobutanolat, Titantetra-sec.-butanolat und Titantetra-tert.-butanolat, besonders bevorzugt Titantetra-n-propanolat, Titantetra-iso-propanolat, Titantetra-n-butanolat und Titantetra-iso-butanolat oder deren Gemische.

Als Barium- oder Strontiumhydroxid-hydrate eignen sich die bekannten Hydroxid-hydrate, z.B. Barium- oder Strontiumhydroxid-octahydrat. Weiterhin wird erfindungsgemäß Barium- oder Strontiumhydroxid einsetzt. Dabei werden über das Kristallwasser nur insgesamt 2 bis 4 Mole Wasser pro Mol Titanat eingebracht. Diese Vorgehensweise führt zu einer gießfähigen, stabilen Suspension der Titanatteilchen im Alkohol oder Glykolether.

Als Alkohole eignen sich C₁- bis C₈-Alkanole, bevorzugt C₁- bis C₄-Alkanole wie Methanol, Ethanol, n-Propanol, Iso-propanol, n-Butanol, iso-Butanol, sec.-Butanol oder tert.-Butanol, besonders bevorzugt C₁- bis C₃-Alkanol wie Methanol, Ethanol, n-Propanol oder Iso-propanol, insbesondere Methanol oder Ethanol.

Als Glykolether eignen sich alle bekannten Glykolether wie beispielsweise Ethylenglykol-mono-methylether, Ethylenglykol-mono-ethylether, Ethylenglykol-mono-n-propylether, Ethylenglykol-mono-iso-propylether, Ethylenglykol-mono-n-butylether, Ethylenglykol-mono-iso-butylether, Ethylenglykol-mono-sec.-butylether, Ethylenglykol-tert.-butylether, Diethylenglykol-mono-methylether, Diethylenglykol-mono-ethylether, Diethylenglykol-mono-n-propylether, Diethylenglykol-mono-iso-propylether, Diethylenglykol-mono-n-butylether, Diethylenglykol-mono-iso-butylether, Diethylenglykol-mono-sec.-butylether, Diethylenglykol-tert.-butylether, bevorzugt Ethylenglykol-mono-ethylether, Ethylenglykol-mono-n-propylether, Ethylenglykol-mono-iso-propylether, Ethylenglykol-mono-n-butylether, Ethylenglykol-mono-iso-butylether, Ethylenglykol-mono-sec.-butylether, Ethylenglykol-tert.-butylether, Diethylenglykol-mono-ethylether, Diethylenglykol-mono-n-propylether, Diethylenglykol-mono-iso-propylether, Diethylenglykol-mono-n-butylether, Diethylenglykol-mono-iso-butylether, Diethylenglykol-mono-sec.-butylether und Diethylenglykol-tert.-butylether, besonders bevorzugt Ethylenglykol-mono-n-propylether, Ethylenglykol-mono-iso-propylether, Ethylenglykol-mono-n-butylether, Ethylenglykol-mono-iso-butylether, Ethylenglykol-mono-sec.-butylether, Ethylenglykol-tert.-butylether, Diethylenglykol-mono-n-propylether, Diethylenglykol-mono-iso-propylether, Diethylenglykol-mono-n-butylether, Diethylenglykol-mono-iso-butylether, Diethylenglykol-mono-sec.-butylether und Diethylenglykol-tert.-butylether, insbesondere Ethylenglykol-mono-iso-propylether, Ethylenglykol-mono-iso-butylether, Ethylenglykol-tert.-butylether, Diethylenglykol-mono-iso-propylether, Diethylenglykol-mono-iso-butylether und Diethylenglykol-tert.-butylether.

Es kann vorteilhaft sein, das Eintragen des Barium- oder Strontiumhydroxid-octahydrat durch kräftiges Rühren zu unterstützen.

Eine vorteilhafte Ausführungsform besteht darin, dass kein zusätzliches Wasser außer dem Wasser aus dem Hydroxid-hydrat in die Umsetzung eingetragen wird.

Gegebenenfalls können Dotierelemente wie Mg, Ca, Zn, Zr, V, Nb, Ta, Bi, Cr, Mo, W, Mn, Fe, Co, Ni, Pb, Ce oder deren Gemische, bevorzugt Mg, Ca, Cr, Fe, Co, Ni, Pb oder deren Gemische, beispielsweise in Form ihrer Hydroxide, Oxide, Carbonate, Carboxylate oder Nitrate eingebracht werden.

Die erfindungsgemäß hergestellten Barium- und Strontiumtitanate haben einen mittleren Teilchendurchmesser von kleiner als 10 nm, bevorzugt 0,5 bis 9,9 nm, besonders bevorzugt 0,6 bis 9 nm, insbesondere 1 bis 8 nm.

Barium- und Strontiumtitanat oder deren Gemische eignen sich als Dielektrika und haben relative Dielektrizitätskonstanten bis 5.000. Sie eignen sich als Dielektrika in Kondensatoren, insbesondere in keramischen Kondensatoren.

Es ist möglich, kommerzielle Metallfolien wie Nickelfolien mit den erfindungsgemäßen Dispersionen in Schichtdicken unterhalb 0,5 µm zu beschichten, den Alkohol oder Glykolether zu verdampfen und bevorzugt unter Sauerstoffausschluss eine entsprechend dünne Titanatschicht auf der Metallfolie zu erzeugen und damit einen Wickelkondensator herzustellen.

### Beispiele

### Beispiel 1

Unter Stickstoffatmosphäre wurden 716 g wasserfreies Ethanol und 284 g (1 Mol) Titantetraisopropoxid (Titantetra-iso-propanolat) unter Rückfluss erhitzt und eine Mischung aus 107,1 g (5/8 Mol) wasserfreiem Bariumhydroxid und 118,3 g (3/8 Mol) Bariumhydroxid-octahydrat zugegeben. Nach 10 h kochen unter Rückfluss wurde die fließfähige Suspension abgekühlt.

Die Untersuchung der Probe mittels Elektronenmikroskopie ergab sehr regelmäßige Bariumtitanatteilchen von ca. 2 nm Durchmesser. Das Bariumtitanat wies eine kubische Kristallstruktur auf, die Gitterkonstante aₒ betrug 0,4054 nm.

Ein Teil der Suspension wurde bei einer Temperatur von ca. 180°C sprühgetrocknet. Man erhielt ein sehr feines Bariumtitanat-Pulver mit einem Ba/TiO-Verhältnis von 0,139.

Aus dem getrockneten Pulver wurde durch Verpressen ein Grünkörper mit der Dichte 2,12 g/cm³ hergestellt. Die Probe wurde unter Luft bei 1000°C innerhalb von 5 h zu einem dichten Formkörper mit der Dichte 5,92 g/cm³ gesintert.

### Beispiel 2

Analog Beispiel 1 wurden 203,8 g Ethylenglykol-mono-n-butylbutylether und 71 g (250 mmol) Titantetraisopropoxid (Titantetra-iso-propanolat) auf 100°C erhitzt und eine Mischung aus 27,9 g (156 mmol) wasserfreiem Bariumhydroxid und 29,6 g (94 mmol) Bariumhydroxid-octahydrat zugegeben. Nach 21 h bei 100°C wurde die fließfähige Suspension abgekühlt

Die Untersuchung der Probe mittels Elektronenmikroskopie ergab Bariumtitanatteilchen von ca. 3 bis 10 nm Durchmesser.

## Patentansprüche

1. Verfahren zur Herstellung von Barium- oder Strontiumtitanat mit einem mittleren Teilchendurchmesser von kleiner als 10 nm, **dadurch gekennzeichnet, dass** man Titanalkoholate mit Barium- oder Strontiumhydroxid-hydrat und wasserfreiem Barium- oder Strontiumhydroxid, wobei über das Kristallwasser insgesamt 2 bis 4 Mole Wasser pro Mol Titanat eingebracht werden, in einem C₁- bis C₈-Alkohol oder einem Glykolether, wobei die alkoholische Titanalkoholat-Lösung eine Konzentration von 50 bis 800 g/l aufweist, bei einer Temperatur von 50 bis 150°C umsetzt.

2. Verfahren zur Herstellung von Barium- oder Strontiumtitanat nach Anspruch 1, **dadurch gekennzeichnet, dass** man als Barium- oder Strontiumhydroxid-hydrat das Octahydrat einsetzt.

3. Verfahren zur Herstellung von Barium- oder Strontiumtitanat nach einem der Ansprüche 1 oder 2, **dadurch gekennzeichnet, dass** man Gemische aus Barium- oder Strontiumhydroxid und deren Octahydrat einsetzt.

## Claims

1. A process for preparing barium titanate or strontium titanate having a mean particle diameter of less than 10 nm, which comprises reacting titanium alkoxides with barium hydroxide hydrate or strontium hydroxide hydrate and anhydrous barium hydroxide or strontium hydroxide, where a total of from 2 to 4 mol of water per mole of titanate are introduced via the water of crystallization, in a C₁-C₈-alcohol or a glycol ether, where the alcoholic titanium alkoxide solution has a concentration of from 50 to 800 g/l, at a temperature of from 50 to 100°C.

2. The process for preparing barium titanate or strontium titanate according to claim 1, wherein the barium hydroxide hydrate or strontium hydroxide hydrate used is the octahydrate.

3. The process for preparing barium titanate or strontium titanate according to claim 1 or 2, wherein mixtures of barium hydroxide or strontium hydroxide and its octahydrate are used.

## Revendications

1. Procédé de préparation de titanate de baryum ou de strontium présentant un diamètre moyen de particule inférieur à 10 nm, **caractérisé en ce qu'**on fait réagir à une température de 50 à 150°C des alcoolates de titane avec de l'hydrate d'hydroxyde de baryum ou de strontium et de l'hydroxyde de baryum ou de strontium anhydre, au total 2 à 4 moles d'eau par mole de titanate étant introduites par l'intermédiaire de l'eau de cristallisation, dans un alcool en C₁-C₈ ou un éther de glycol, la solution alcoolique d'alcoolate de titane présentant une concentration de 50 à 800 g/l.

2. Procédé de préparation de titanate de baryum ou de strontium suivant la revendication 1, **caractérisé en ce que**, comme hydrate d'hydroxyde de baryum ou de strontium, on met en oeuvre l'octahydrate.

3. Procédé de préparation de titanate de baryum ou de strontium suivant l'une des revendications 1 ou 2, **caractérisé en ce qu'**on met en oeuvre des mélanges d'hydroxyde de baryum ou de strontium et leur octahydrate.
